# FASCICULE DE BREVET EUROPEEN

(11) **EP 2 550 167 B1**
(45) Date de publication et mention de la délivrance du brevet: **07.05.2014**
(21) Numéro de dépôt: 11714356.0
(22) Date de dépôt: 16.03.2011
(51) Int. Cl.: B60G 7/00, B60G 21/05, B60K 7/00, B60K 1/00

(54) **TRAIN ARRIERE POUR VEHICULE AUTOMOBILE, COMPORTANT UN GROUPE MOTOPROPULSEUR**
HINTERACHSENANORDNUNG FÜR EIN KRAFTFAHRZEUG MIT EINEM ANTRIEBSAGGREGAT
REAR AXLE ASSEMBLY FOR A MOTOR VEHICLE, COMPRISING A POWER PLANT

(30) Priorité: 25.03.2010 FR 1052152
(43) Date de publication de la demande: 30.01.2013
(73) Titulaire: Peugeot Citroën Automobiles SA, 78140 Vélizy Villacoublay (FR)
(72) Inventeur: PALPACUER, Eric, F-75013 Paris (FR); GUINGAND, Frédéric, F-92370 Chaville (FR); MONTEIL, Christophe, F-60530 Mesnil En Thelle (FR)
(86) Numéro de dépôt international: PCT/FR2011/050525
(87) Numéro de publication internationale: WO 2011/117511

(56) Documents cités:
- EP-A1- 2 116 401
- DE-A1- 10 359 130
- DE-A1-102008 031 123
- US-A1- 2007 251 742

## Description

La présente invention concerne un train arrière motorisé pour véhicule automobile, comportant deux arbres de roue entraînant les roues arrière, ainsi qu'un véhicule automobile équipé d'un tel train arrière. Un train arrière comportant les caractéristiques du préambule de la revendication 1 est connu du document EP-A-2 116 401.

Un type de véhicule hybride connu comporte un groupe motopropulseur comprenant un moteur thermique disposé à l'avant, réalisant la motorisation principale du véhicule, et un groupe motopropulseur comportant un moteur électrique fixé entre les roues arrière du véhicule, qui entraîne ces roues arrière par deux arbres disposés sensiblement suivant les axes de ces roues.

Le moteur électrique est relié à une transmission comprenant un différentiel situé sensiblement au milieu du train arrière, lié aux arbres de roue comportant à chaque extrémité un joint d'articulation, puis des cannelures axiales d'entraînement. Pour les arbres de roue, du côté intérieur tourné vers l'axe longitudinal du véhicule, les cannelures pénètrent dans une partie creuse correspondante du différentiel, et du côté extérieur dans le moyeu de roue, pour réaliser la liaison entre ce différentiel et cette roue tout en acceptant des débattements de la suspension.

Certains types de trains arrière, en particulier les trains arrière appelés semi-rigide, comprennent une traverse déformable comportant à ses extrémités les bras de suspension intégrés à cette traverse. Chaque bras de suspension comprend généralement un support sensiblement transversal, qui supporte le porte-moyeu de la roue fixé dessus du côté extérieur, ce support disposant d'un perçage central permettant le passage de l'arbre de roue qui rejoint le moyeu de la roue.

La longueur totale de l'arbre de roue comprenant ses extrémités cannelées, est alors largement supérieure à la distance entre la sortie de la transmission et la plaque support.

Un problème qui se pose est que la mise en place d'un groupe motopropulseur préparé à l'avance et comprenant ses deux arbres de roue, sur le train arrière fixé sous le véhicule, est compliquée car les parties cannelées extérieures des deux arbres dépassant latéralement des deux plaques transversales, s'insèrent alors difficilement dans les perçages centraux de ces plaques.

Une telle manoeuvre est longue et délicate à réaliser, et nécessite l'intervention de plusieurs opérateurs sous le véhicule, utilisant des outillages spécialisés.

La présente invention a notamment pour but d'éviter ces inconvénients de la technique antérieure, et de proposer un train arrière pour véhicule automobile permettant un montage facile d'un groupe motopropulseur.

Elle propose à cet effet un train arrière pour véhicule automobile, comportant un groupe motopropulseur entraînant chaque roue arrière par un arbre de roue disposé sensiblement dans l'axe de cette roue, chaque côté du train arrière comportant un support fixé sur un élément de suspension, formant une plaque sensiblement transversale qui supporte du côté extérieur un porte-moyeu de roue, ce support transversal disposant d'un perçage central de passage de l'arbre de roue, caractérisé en ce que le support transversal comporte un passage radial ouvrant le contour du perçage central, qui permet d'introduire radialement l'arbre de roue pour le rentrer dans ce perçage central.

Un avantage du train arrière selon l'invention, est que l'on peut préparer un groupe motopropulseur comprenant les arbres de roue, et le mettre en position dans le train arrière, puis facilement glisser radialement les extrémités extérieures de ces deux arbres dans les passages radiaux pour introduire ces extrémités dans les perçages centraux des plaques support.

Le train arrière selon l'invention peut en outre comporter une ou plusieurs des caractéristiques suivantes, qui peuvent être combinées entre elles.

Avantageusement, le support transversal comporte une tôle comprenant des découpes formant le perçage central et le passage radial.

La tôle du support transversal peut comporter de plus des perçages de fixation recevant des vis de fixation du porte-moyeu.

Selon une version, le train arrière peut comporter une platine de renforcement fixée sur chaque support transversal en face du passage radial, de manière à réaliser un pontage reliant les deux côtés de ce passage radial.

Avantageusement, des vis de fixation du porte-moyeu, peuvent serrer aussi la platine de renforcement sur le support transversal.

Selon un mode de réalisation, le passage radial est tourné vers le haut.

En particulier, le train arrière peut comporter une traverse déformable comprenant à ses extrémités les bras de suspension intégrés à cette traverse, chaque bras de suspension recevant sur le dessus un support transversal.

L'invention a aussi pour objet un véhicule automobile comprenant un train arrière à traverse déformable disposant d'un groupe motopropulseur, ce train arrière comportant de plus l'une quelconque des caractéristiques précédentes.

En particulier, le véhicule automobile peut disposer d'une motorisation principale du train avant comprenant un moteur thermique, et d'un groupe motopropulseur arrière comprenant une machine électrique, pour permettre une traction hybride de ce véhicule.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue partielle d'un train arrière à traverse déformable, selon l'art antérieur ;
- la figure 2 est une vue complète d'un train arrière à traverse déformable selon l'invention, comprenant le groupe motopropulseur ;
- la figure 3 est une vue de ce groupe motopropulseur dans une étape de montage ; et
- les figures 4 et 5 présentent un bras de suspension dans deux étapes suivantes de montage, qui se succèdent.

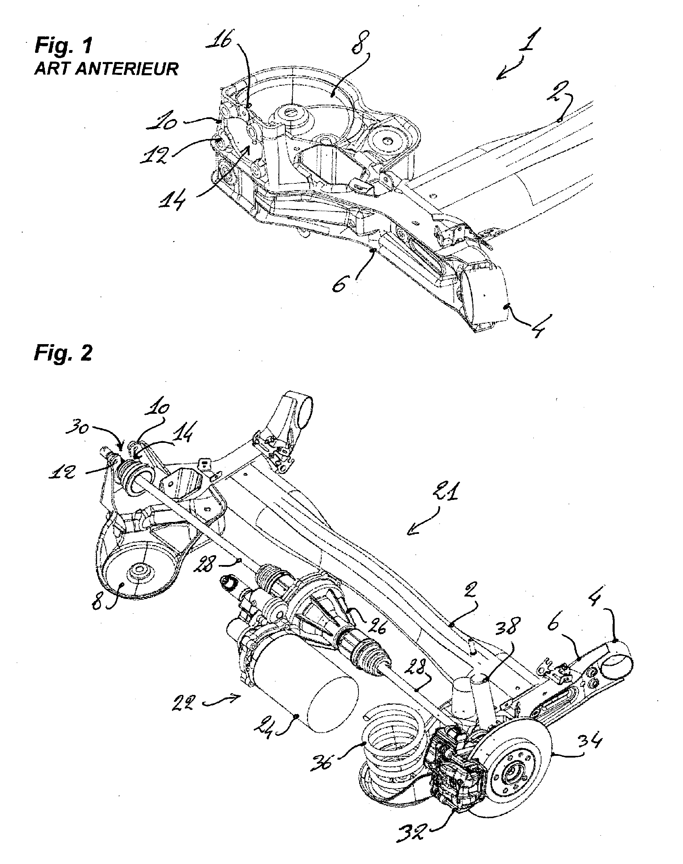

La figure 1 présente une partie latérale d'un train arrière 1, comprenant une traverse déformable 2 reliant deux bras de suspension 6 fixés rigidement à ses extrémités.

L'extrémité avant du bras de suspension 6, comporte un anneau 4 recevant un pivot monté de manière élastique, qui relie ce bras à la caisse du véhicule non représentée, tout en permettant un pivotement du bras du aux mouvements de la suspension. La partie arrière du bras de suspension 6 comporte une coupelle 8 recevant l'extrémité inférieure du ressort de suspension, qui est interposé entre ce bras de suspension et la caisse du véhicule.

La partie arrière du bras de suspension 6 comporte de plus un support 10 comprenant une face plane sensiblement transversale tournée vers l'extérieur, réalisé à partir d'une tôle pliée qui est soudée au dessus de ce bras. La face plane du support transversal 10 comporte sur sa périphérie quatre perçages de fixation 12, permettant le passage de vis qui viennent se visser dans un porte-moyeu de roue non représenté, pour le serrer sur cette face plane.

Le support transversal 10 comporte entre les perçages de fixation 12, un perçage central 14 de grand diamètre qui réalise une ouverture couvrant une majeure partie de la face plane de ce support. Le perçage central 14 permet le passage d'un arbre de roue non représenté, qui relie un groupe motopropulseur se trouvant au milieu du train arrière 1 au moyeu de roue disposé à l'extérieur, en traversant le support transversal 10.

On notera que le perçage central 14 a un contour entièrement fermé, le support transversal 10 étant continu au dessus de ce perçage. La mise en place de l'arbre de roue 28 nécessite de venir glisser cet arbre sensiblement dans l'axe de la roue, à partir du coté intérieur du support transversal 10, ce qui peut être difficile à réaliser quand il faut le faire simultanément des deux côtés sur les deux arbres de roue.

La figure 2 présente un train arrière complet 21 à traverse déformable 2 équipé d'un groupe motopropulseur 22, comprenant une machine électrique 24 accouplée à un réducteur 26 contenant un différentiel de sortie se trouvant au milieu de ce train arrière. Le différentiel de sortie entraîne chaque moyeu de roue arrière par un arbre de roue 28, qui est situé sensiblement dans l'axe de cette roue.

Le porte-moyeu de chaque roue fixé sur le support transversal 10, comporte un étrier de frein 32 qui freine un disque de frein 34 lié au moyeu de la roue. Des ressorts de suspension 36 et des amortisseurs 38 reliés à la caisse du véhicule, assurent la suspension de ce véhicule.

Le support transversal 10 comporte un perçage central 14 comprenant vers le haut un passage radial 30, créant une ouverture vers l'extérieur du contour de ce perçage central. La tôle formant le support transversal 10, comporte une découpe supplémentaire réalisée entre deux perçages de fixation supérieurs 12, pour réaliser ce passage radial 30 permettant à partir du dessus, un coulissement radial de l'arbre de roue pour le rentrer dans le perçage central 14.

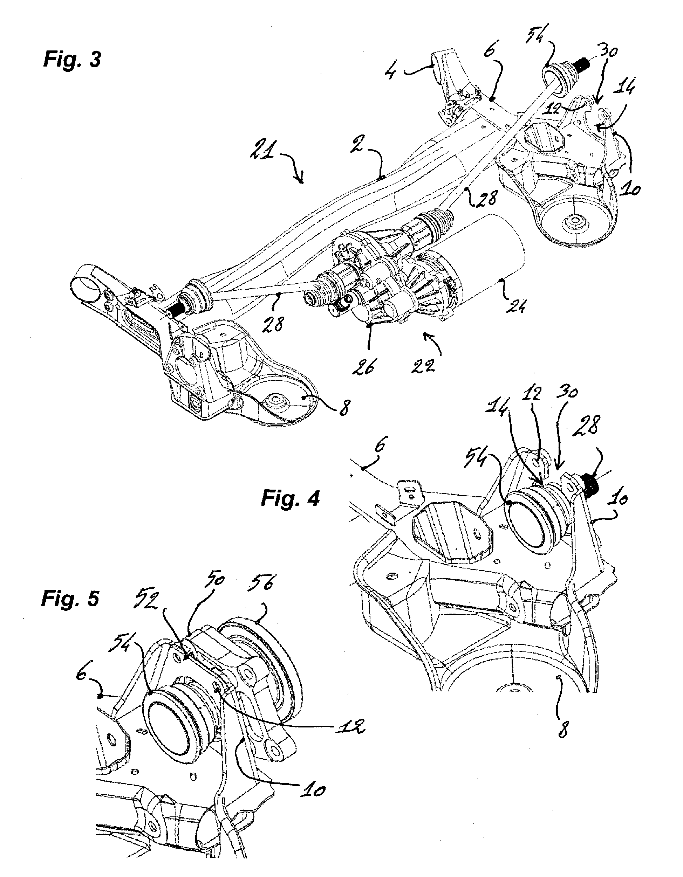

Les figures 3 à 5 détaillent le montage du groupe motopropulseur 22 dans le train arrière 21.

Le train arrière 21 ayant déjà été fixé sous la caisse du véhicule, le groupe motopropulseur 22 comprenant ses arbres de roue 28, est mis en position, les extrémités extérieures des arbres de roue venant au dessus des supports transversaux 10 comme présenté figure 3. Chaque arbre de roue 28 est ensuite descendu facilement dans le passage radial 30, pour venir dans le perçage central 14 du support transversal 10.

La figure 4 présente l'extrémité de l'arbre de roue 28 comprenant un soufflet de protection 54 du joint d'articulation extérieur, qui est mise en place dans le perçage central 14. Pour simplifier le dessin, le reste de l'arbre de roue 28 n'est pas représenté.

Comme présenté figure 5, le porte-moyeu de roue 50 est ensuite introduit axialement par l'extérieur sur l'extrémité de l'arbre de roue 28, les cannelures de son moyeu venant s'ajuster sur celles de l'arbre. Des perçages taraudés du porte-moyeu 50 sont alignés avec les perçages de fixation 12 du support transversal 10, pour permettre un serrage axial du porte-moyeu sur ce support par une série de vis vissées par l'intérieur.

En option, une platine de renforcement 52 peut être disposée sur la face intérieure du support transversal 10, en face du passage radial 30. La platine de renforcement 52 est alors serrée par les vis de fixation du porte-moyeu 50 disposées de chaque côté du passage radial 30, pour réaliser un pontage renforçant la partie ouverte du support transversal 10, et éviter une déformation du support avec les contraintes exercées par les roues.

Le train arrière suivant l'invention permet avec de simples découpes supplémentaires de la tôle, entraînant un surcoût négligeable, de faciliter le montage du groupe motopropulseur et de réduire le coût de ce montage. De plus ces découpes peuvent être réalisées sur tous les trains arrière recevant ou non une motorisation, ce qui permet de garder un train arrière standard se montant sur la caisse du véhicule toujours de la même manière.

## Revendications

1. Train arrière pour véhicule automobile, comportant un groupe motopropulseur (22) entraînant chaque roue arrière par un arbre de roue (28) disposé sensiblement dans l'axe de cette roue, chaque côté du train arrière comportant un support (10) fixé sur un élément de suspension (6), formant une plaque sensiblement transversale qui supporte un porte-moyeu de roue (50), ce support transversal disposant d'un perçage central (14) de passage de l'arbre de roue (28), **caractérisé en ce que** le support transversal (10) comporte un passage radial (30) ouvrant le contour du perçage central (14), qui permet d'introduire radialement l'arbre de roue pour le rentrer dans ce perçage central.

2. Train arrière suivant la revendication 1, **caractérisé en ce que** le support transversal (10) comporte une tôle comprenant des découpes formant le perçage central (14) et le passage radial (30).

3. Train arrière suivant la revendication 2, **caractérisé en ce que** la tôle du support transversal (10) comporte de plus des perçages de fixation (12) recevant des vis de fixation du porte-moyeu (50).

4. Train arrière suivant l'une quelconque des revendications précédentes, **caractérisé en ce qu'**il comporte une platine de renforcement (52) fixée sur chaque support transversal (10) en face du passage radial (30), de manière à réaliser un pontage reliant les deux côtés de ce passage radial.

5. Train arrière suivant les revendications 3 et 4, **caractérisé en ce que** des vis de fixation du porte-moyeu (50), serrent aussi la platine de renforcement (52) sur le support transversal (10).

6. Train arrière suivant l'une quelconque des revendications précédentes, **caractérisé en ce que** le passage radial (30) est tourné vers le haut.

7. Train arrière suivant la revendication 6, **caractérisé en ce qu'**il comporte une traverse déformable (2) comprenant à ses extrémités les bras de suspension (6) intégrés à cette traverse, chaque bras de suspension recevant sur le dessus un support transversal (10).

8. Véhicule automobile comprenant un train arrière à traverse déformable (21) comportant un groupe motopropulseur (22), **caractérisé en ce que** ce train arrière est réalisé suivant l'une quelconque des revendications précédentes.

9. Véhicule automobile suivant la revendication 8, **caractérisé en ce qu'**il dispose d'une motorisation principale du train avant comprenant un moteur thermique, et d'un groupe motopropulseur arrière (22) comprenant une machine électrique, pour permettre une traction hybride de ce véhicule.

## Patentansprüche

1. Hinterachsanordnung für Kraftfahrzeug, die ein Antriebsaggregat (22) aufweist, das jedes hintere Rad durch eine Radwelle (28) antreibt, die im Wesentlichen in der Achse dieses Rads angeordnet ist, wobei jede Seite der Hinterachsanordnung eine Stütze (10) aufweist, die auf einem Aufhängungselement (6) befestigt ist, das eine im Wesentlichen quer liegende Platte bildet, die einen Radnabenträger (50) trägt, wobei diese Querstütze über eine zentrale Durchgangsbohrung (14) der Radwelle (28) verfügt, **dadurch gekennzeichnet, dass** die Querstütze (10) einen radialen Durchgang (30) aufweist, der die Kontur der zentralen Bohrung (14) öffnet, die es erlaubt, die Radwelle radial einzufügen, um sie in diese zentrale Bohrung einzusetzen.

2. Hinterachsanordnung nach Anspruch 1, **dadurch gekennzeichnet, dass** die Querstütze (10) ein Blech aufweist, das Ausschnitte aufweist, die die zentrale Bohrung (14) und den radialen Durchgang (30) bilden.

3. Hinterachsanordnung nach Anspruch 2, **dadurch gekennzeichnet, dass** das Blech der Querstütze (10) außerdem Befestigungsbohrungen (12) aufweist, die Befestigungsschrauben des Nabenträgers (50) aufnehmen.

4. Hinterachsanordnung nach einem der vorhergehenden Ansprüche, **dadurch gekennzeichnet, dass** sie eine Verstärkungsplatte (52) aufweist, die auf jeder Querstütze (10) gegenüber dem radialen Durchgang (30) derart befestigt ist, dass eine Überbrückung hergestellt ist, die die zwei Seiten dieses radialen Durchgangs verbindet.

5. Hinterachsanordnung nach den Ansprüchen 3 und 4, **dadurch gekennzeichnet, dass** Befestigungsschrauben des Nabenträgers (50) auch die Verstärkungsplatte (52) auf der Querstütze (10) spannen.

6. Hinterachsanordnung nach einem der vorhergehenden Ansprüche, **dadurch gekennzeichnet, dass** der radiale Durchgang (30) nach oben gerichtet ist.

7. Hinterachsanordnung nach Anspruch 6, **dadurch gekennzeichnet, dass** sie einen verformbaren Querträger (2) aufweist, der an seinen Enden die Aufhängungsarme (6), die in diesen Querträger integriert sind, aufweist, wobei jeder Aufhängungsarm auf der Oberseite eine Querstütze (10) erhält.

8. Kraftfahrzeug, das eine verformbare Hinterachsanordnung (21) aufweist, die ein Antriebsaggregat (22) aufweist, **dadurch gekennzeichnet, dass** die Hinterachsanordnung gemäß einem der vorhergehenden Ansprüche hergestellt ist.

9. Kraftfahrzeug nach Anspruch 8, **dadurch gekennzeichnet, dass** es über einen Hauptantrieb der Vorderachsanordnung verfügt, der einen Verbrennungsmotor aufweist, und über ein hinteres Antriebsaggregat (22), das einen Elektromotor aufweist, um einen Hybrid-Traktionsantrieb dieses Fahrzeugs zu erlauben.

## Claims

1. A rear axle assembly for a motor vehicle, comprising a power plant (22) driving each rear wheel via a wheel shaft (28) positioned substantially along the axis of this wheel, each side of the rear axle assembly comprising a support (10) fixed to a suspension element (6) and forming a substantially transverse plate which supports a wheel hub carrier (50), this transverse support having a central drilling (14) for the passage of the wheel shaft (28), **characterized in that** the transverse support (10) comprises a radial passage (30) that opens the contour of the central drilling (14) so that the wheel shaft can be introduced radially into this central drilling.

2. The rear axle assembly according to Claim 1, **characterized in that** the transverse support (10) comprises a sheet including cutouts forming the central drilling (14) and the radial passage (30).

3. The rear axle assembly according to Claim 2, **characterized in that** the sheet of the transverse support (10) comprises in addition attachment drillings (12) receiving attachment screws of the hub carrier (50).

4. The rear axle assembly according to any one of the preceding claims, **characterized in that** it comprises a reinforcement plate (52) fixed on each transverse support (10) opposite the radial passage (30), so as to realize a bridge connecting the two sides of this radial passage.

5. The rear axle assembly according to Claims 3 and 4, **characterized in that** attachment screws of the hub carrier (50) also clamp the reinforcement plate (52) on the transverse support (10).

6. The rear axle assembly according to any one of the preceding claims, **characterized in that** the radial passage (30) is turned upwards.

7. The rear axle assembly according to Claim 6, **characterized in that** it comprises a deformable cross-member (2) including at its ends the suspension arms (6) integrated to this cross-member, each suspension arm receiving on the top a transverse support (10).

8. A motor vehicle including a rear axle assembly with a deformable cross-member (21) comprising a power plant (22), **characterized in that** this rear axle assembly is realized according to any one of the preceding claims.

9. The motor vehicle according to Claim 8, **characterized in that** it has a main drive unit of the front axle assembly including a heat engine, and a rear power plant (22) including an electric machine, to permit a hybrid traction of this vehicle.
